# FASCICULE DE BREVET EUROPEEN

(11) **EP 0 452 213 B1**
(45) Date de publication et mention de la délivrance du brevet: **22.09.1993**
(21) Numéro de dépôt: 91400957.6
(22) Date de dépôt: 10.04.1991
(51) Int. Cl.: B23K 9/32, B23K 9/028

(54) **Dispositif de protection des soudures par diffusion gazeuse et procédé de mise en oeuvre**
Schweiss-Schutzvorrichtung durch Gasdiffusion und Verfahren zur Durchführung
Welds protection device by gaseous diffusion and method for carrying out

(30) Priorité: 12.04.1990 FR 9004706
(43) Date de publication de la demande: 16.10.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Bernuchon, Roland, Louis Georges, F-94120 Fontenay sous Bois (FR); Riviere, Jacques Louis Romain, F-91360 Villemoisson S/Orge (FR)
(74) Mandataire: Moinat, François

(56) Documents cités:
- CH-A- 585 606
- GB-A- 2 061 156
- US-A- 4 839 489

## Description

L'invention concerne un dispositif de protection des soudures par diffusion gazeuse, particulièrement adapté pour les applications de procédés de soudage par fusion utilisant une machine automatique ou un robot de soudage. Elle concerne également un procédé de soudage mis en oeuvre au moyen dudit dispositif.

L'invention s'applique à la mise en oeuvre de procédés de soudage, bien connus en soi, dits soudage TIG ou soudage par plasma d'arc ou soudage par faisceau laser.

Dans certaines applications de ces procédés et selon la nature des matériaux des pièces à souder concernées, notamment dans le cas d'alliages de titane ou de superalliages à base de nickel utilisés pour des pièces de moteurs aéronautiques, il est souvent nécessaire de protéger les zones fondues et le cordon de soudage contre les risques d'oxydation au moyen d'une couverture de gaz protecteur, notamment un gaz neutre tel que l'argon ou l'hélium. Il est ainsi connu de réaliser la protection gazeuse au niveau de la zone fondue directement au moyen de la torche de soudage, l'admission de gaz se faisant au travers de la torche et la diffusion du gaz à l'extrémité de ladite torche. Un outillage complémentaire dit trainard de soudage doit parfois être adjoint. Cet outillage doit recouvrir sur une certaine longueur la zone de proximité de ladite torche au niveau du cordon de soudure qui vient d'être formé et se trouve en cours de refroidissement et cet outillage doit par conséquent s'adapter à la géométrie de la pièce au niveau de la soudure et suivre les déplacements de la torche de soudage lors d'une opération de soudage. La longueur de recouvrement de soudure assuré par l'outillage est d'autant plus importante que le matériau à souder est épais et sensible à l'oxydation. Pour des pièces à base de titane d'épaisseur 8 mm, cette longueur peut par exemple dépasser 150 mm. La mise en oeuvre de ces techniques antérieurement connues dans leur principe (voir par exemple CH-A -585 606) et déjà utilisées se heurte toutefois à de sérieuses difficultés lorsque les opérations de soudage sont entièrement automatisées pour exécution soit sur machine automatique soit encore au moyen d'un robot de soudage dont tous les déplacements sont programmés, tous les paramètres du soudage bénéficiant d'un réglage automatique. En outre, les trainards conventionnels précédemment utilisés présentent une géométrie fixe, ce qui impose la mise en place d'un outillage spécifique à chaque configuration de pièce.

US-A-4 839 489 décrit un dispositif de protection de soudure susceptible de s'adapter au contour de la pièce à souder au moyen d'un manchon flexible.

Le but de l'invention est de réaliser un dispositif et de définir un procédé de mise en oeuvre permettant de résoudre les problèmes notés ci-dessus pour lesquels aucune solution pleinement satisfaisante n'a été auparavant déterminée.

Un dispositif de protection des soudures par diffusion gazeuse répondant aux conditions est caractérisé en ce qu'il comporte au moins deux éléments formant caissons articulés entre eux et reliés à une extrémité de manière articulée à un élément de fixation formant buse sur la tête de soudage, lesdits caissons étant reliés à une source d'alimentation en gaz de protection et lesdits éléments étant bloqués entre eux en fonctionnement sous l'effet de la pression dudit gaz.

Avantageusement, une arrivée unique de gaz distribue le gaz vers la tête de soudage proprement dite et vers le dispositif de protection.

Le procédé de soudage mis en oeuvre au moyen dudit dispositif est caractérisé en ce qu'il comporte trois étapes :
(a) - une première étape au cours de laquelle les éléments articulés du dispositif de protection sont mis dans une position adaptée au contour de pièce à souder, notamment suivant une ligne de portion de circonférence dont le rayon correspond à celui de la ligne circulaire de cordon de soudure à obtenir ;
(b) - une deuxième étape d'immobilisation au cours de laquelle l'arrivée du gaz de protection est ouverte et lesdits éléments articulés sont immobilisés entre eux sous l'effet de la pression du gaz ;
(c) - une troisième étape au cours de laquelle la tête de soudage et le dispositif solidaire de protection sont placés à la distance de la pièce, convenable pour le soudage, cette étape étant suivie de l'exécution proprement dite du soudage avec protection du cordon de soudure par diffusion gazeuse au moyen dudit dispositif de protection.

D'autres caractéristiques et avantages de l'invention seront mieux compris à la lecture de la description qui va suivre des modes de réalisation de l'invention, en référence aux dessins annexés sur lesquels:
- la figure 1 représente une vue d'ensemble d'une tête de soudage TIG équipée d'un dispositif de protection des soudures par diffusion gazeuse conforme à un premier mode de réalisation de l'invention ;
- la figure 2 représente une vue agrandie de détail du dispositif de protection représenté sur la figure 1, selon une vue en coupe suivant la ligne II-II de la figure 3 ;
- la figure 3 représente une vue de dessus schématique du dispositif de protection représenté sur la figure 2;
- la figure 4 représente, selon une vue en coupe suivant la ligne IV-IV de la figure 2, le dispositif de protection représenté sur les figures 2 et 3 ;
- la figure 5 représente le dispositif de protection des figures 2 à 4 disposé en position à l'intérieur d'une pièce circulaire ;
- la figure 6 représente le dispositif de protection des figures 2 à 4 dans une configuration correspondant à l'exécution d'une soudure sur la surface externe d'une pièce circulaire;
- la figure 7 représente selon une vue analogue à celle de la figure 2 un dispositif de protection suivant un deuxième mode de réalisation de l'invention ;
- la figure 8 représente le dispositif de protection de la figure 7 dans une configuration correspondant à l'exécution d'une soudure circulaire.

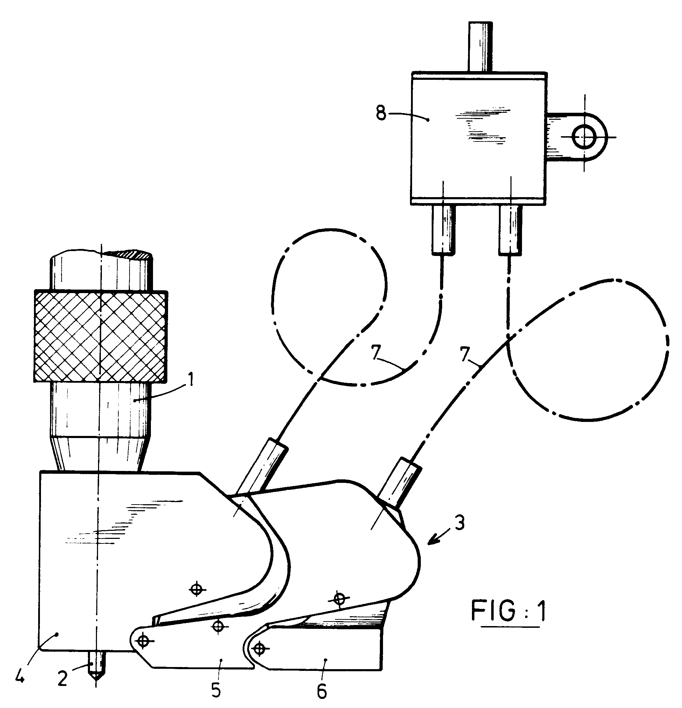

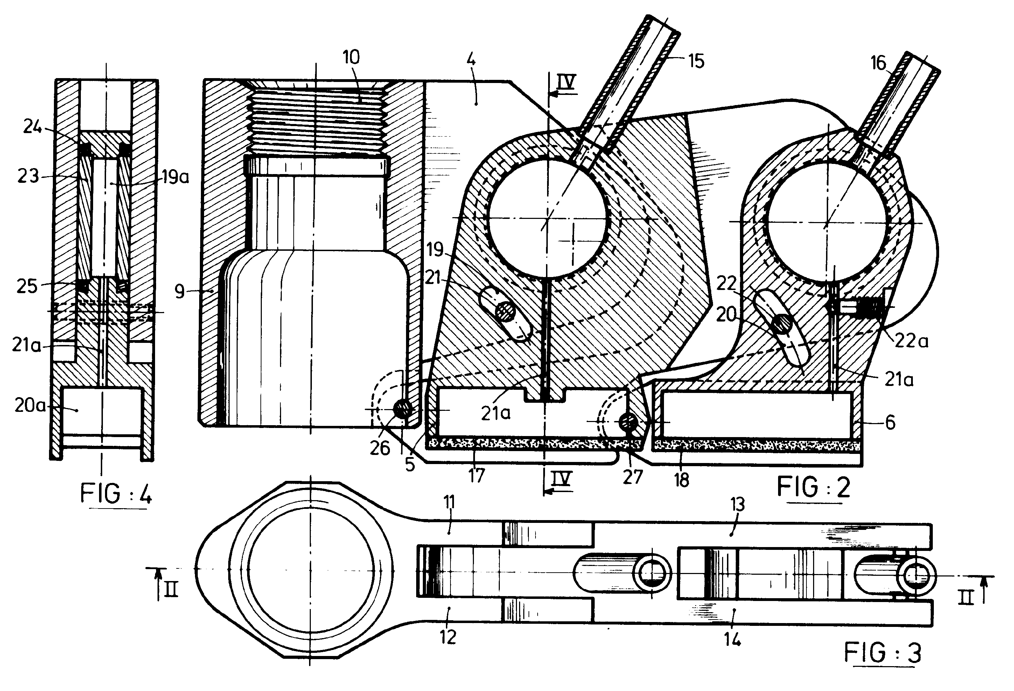

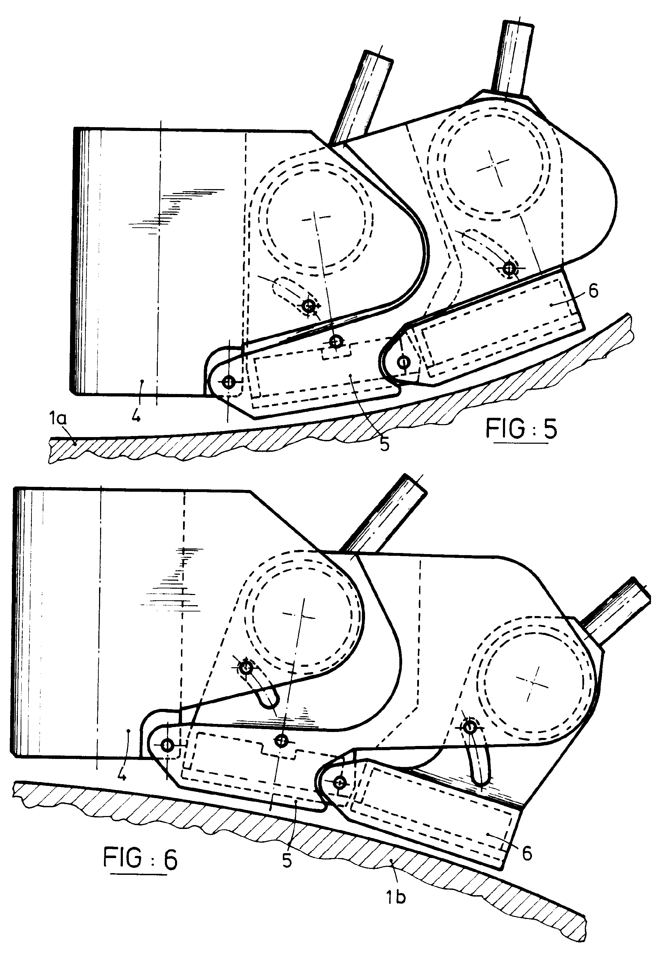

Une tête 1 de soudage montée soit sur une machine automatique soit sur un robot de soudage qui n'a pas été représenté sur les dessins et ne fait pas partie de l'invention est schématiquement représentée sur la figure 1. La tête 1 peut être de divers types, soit à laser, soit pour soudage TIG, soit pour soudage plasma. Dans l'exemple montré sur la figure 1, une tête de soudage TIG comportant une électrode de soudage 2 a été représentée. Sur ladite tête 1 de soudage est adapté un dispositif 3 de protection des soudures par diffusion gazeuse comportant un élément 4 intégré à la tête 1 de soudage et formant buse, assurant la fixation du dispositif 3 sur ladite tête 1 de soudage. A l'élément 4 sont rattachés de manière articulée deux éléments 5 et 6 en forme de caissons qui constituent un traînard de soudage. Ces éléments 5 et 6 sont reliés par des tuyauteries adéquates 7 à une source unique 8 d'alimentation en gaz protecteur. Dans les applications qui sont notamment visées par l'invention au soudage de pièces en alliages de titane ou en superalliages à base de nickel pour moteurs aéronautiques, ledit gaz protecteur est un gaz neutre, notamment l'argon. De manière avantageuse, une source unique de gaz peut être utilisée pour alimenter les éléments 5 et 6 et la tête 1 de soudage proprement dite. Comme montré plus clairement sur les figures 2 à 4, l'élément fixe 4 du dispositif 3 de protection comporte un corps 9 de forme générale cylindrique qui est fixé à l'extrémité de la tête de soudage 1, notamment au moyen d'une partie vissée 10. Le corps 9 est creux et forme buse à l'extrémité de la tête de soudage et est notamment traversé par une électrode 2 de soudage dans l'exemple représenté sur les dessins, ou par tout faisceau énergétique de soudage, notamment tu type laser. Le corps 9 porte deux ailes 11 et 12 formant deux parois écartées, parallèles. Sur ledit élément à buse 4 est monté de manière articulée au moyen d'une goupille 26 formant axe de pivotement l'élément 5 en caisson formant le traînard avant de diffusion de gaz protecteur. L'élément 5 porte à l'arrière deux ailes 13 et 14 formant deux parois écartées parallèles entre lesquelles est placé le second élément 6 en caisson formant le traînard arrière de diffusion de gaz protecteur. Cet élément 6 est également relié à l'élément 5 au moyen d'une goupille 27 formant axe de pivotement. Chaque élément 5 et 6 comporte en outre une lumière 19 et 20 dans laquelle se déplace un doigt de retenue 21 et 22. A la partie supérieure de chaque élément de traînard 5 et 6 est fixée une portion de tube, respectivement 15 et 16 sur lesquelles sont montées les tuyauteries 7 d'amenée de gaz. Le gaz est acheminé à travers chacun desdits éléments de traînard 5 et 6 vers la partie inférieure ouverte en travers de laquelle est disposée une plaquette, respectivement 17 et 18, en matériau poreux assurant une diffusion régulière du gaz.
Le gaz passe d'une chambre interne 19a à la chambre de sortie 20a par un trou de passage 21a dans lequel débouche une vis pointeau 22a utilisable pour le réglage du débit de gaz. La chambre 20a comporte deux pistons 23 susceptibles de glisser le long des parois du corps 9, soit lors d'une remontée des éléments de traînard 5 et 6 pour s'adapter au profil interne, notamment circulaire, d'une pièce 1a, comme schématisé sur la figure 5, soit lors d'une descente par simple effet de gravité des éléments de traînard 5 et 6 pour s'adapter au profil externe, notamment circulaire, d'une pièce 1b, comme schématisé sur la figure 6, ces déplacements étant effectués en l'absence de toute admission de gaz. Lorsqu'une pression de gaz, par contre, s'exerce dans la chambre 19a, les éléments de traînard 5 et 6 se trouvent immobilisés dans la position qu'ils ont acquise qui reste ainsi fixée. A chaque extrémité desdits pistons 23 est disposé un joint torique d'étanchéité 24 et 25.

Un procédé de soudage utilisant le dispositif de protection des soudures par diffusion gazeuse conforme à l'invention et notamment réalisé selon le premier mode qui vient d'être décrit en référence aux figures 1 à 6 comporte les étapes remarquables suivantes :
(a) - une première étape d'accostage au cours de laquelle la tête 1 de soudage est amenée au niveau de la surface de pièce à souder et par simple effet de gravité, les éléments articulés 5 et 6 du dispositif 3 de protection se mettent en appui suivant le contour de pièce ;
(b) - une deuxième étape d'immobilisation au cours de laquelle l'arrivée de gaz de protection à partir de la source 8 est ouverte et lesdits éléments articulés 5 et 6 sont immobilisés entre eux sous l'effet de la pression de gaz ;
(c) - une troisième étape au cours de laquelle la tête 1 de soudage et le dispositif solidaire 3 de protection sont placés à la distance de la pièce convenable pour le soudage.

Après cette mise en place, l'exécution de l'opération proprement dite de soudage se déroule selon les techniques connues en soi du mode de soudage correspondant à la tête de soudage 1 choisie pour l'application concernée, notamment un soudage par procédé TIG, ou plasma ou par faisceau laser. Durant le déroulé de cette opération de soudage, le cordon de soudure est protégé contre les oxydations au moyen de la couverture gazeuse diffusée par le dispositif 3 de protection conforme à l'invention. Grâce à la géométrie variable du dispositif de protection obtenue par l'adaptation des éléments articulés 5 et 6 à un profil donné, le dispositif procure l'avantage d'être utilisable pour des pièces de configuration différente.

Dans l'exemple représenté sur les figures 2 à 6, toute pièce circulaire de rayon à partir de 400 mm peut être traité.

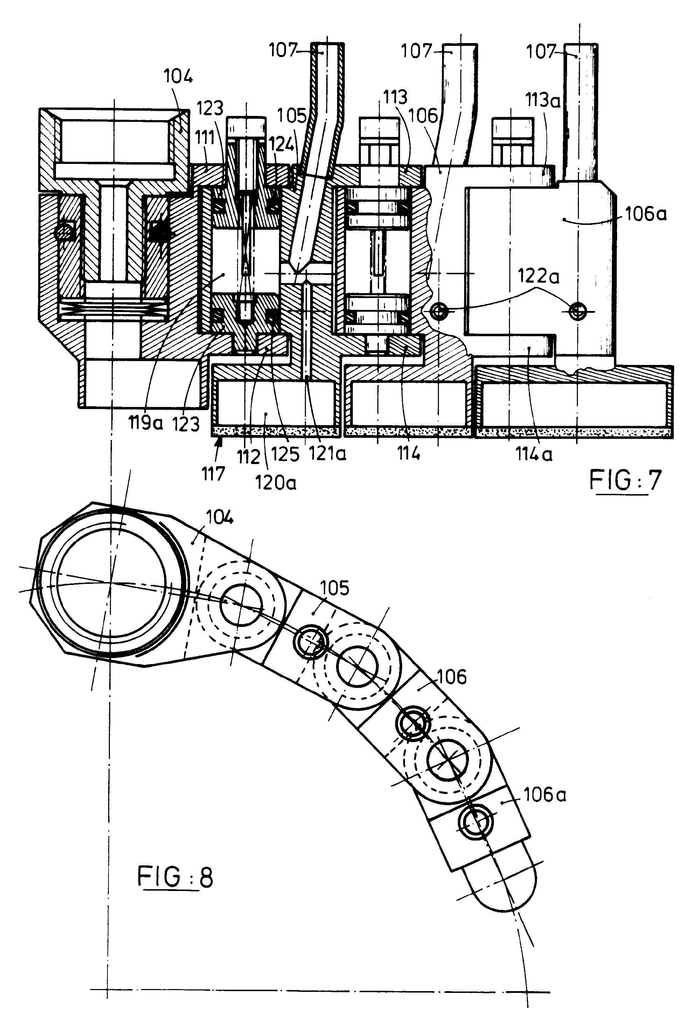

Le mode de réalisation de l'invention qui vient d'être décrit en référence aux figures 1 à 6 est particulièrement adapté à la réalisation de soudures sur des pièces circulaires de type virole cylindrique. Un autre cas d'application fréquemment rencontré concerne la réalisation d'un cordon de soudure circulaire sur un plan de pièce disposé suivant un plan horizontal. Un dispositif de protection conforme à l'invention et adapté à ce type d'application peut dans ce cas être réalisé suivant le mode représenté sur les figures 7 et 8.

On retrouve, comme précédemment, une buse de soudage 104 à laquelle sont rattachés plusieurs éléments, au nombre de trois dans l'exemple représenté sur les figures 7 et 8, 105, 106 et 106a en forme de caissons constituant un trainard de soudage à géométrie variable. Des tuyauteries 107 relient ces éléments à une source d'alimentation en gaz protecteur. Le gaz est acheminé dans chaque élément, par un trou de passage 121a, vers une chambre de sortie 120a fermée par une plaquette 117 en matériau poreux qui assure la diffusion de gaz. Le débit de gaz peut être réglé à l'aide d'une vis pointeau 122a. Chaque élément en caisson tel que 105 comporte une chambre 119a reliée à l'arrivée de gaz et ménagée entre deux pistons 123 qui bloquent ledit élément 105 en position sous l'effet de la pression du gaz, de manière analogue au fonctionnement précédemment décrit pour le premier mode de réalisation, en référence aux figures 2 à 4. Lesdits pistons 123 sont bloqués sur les ailes 111 et 112 de la buse 104. Pour l'élément 106, le blocage est réalisé sur les ailes 113 et 114 de l'élément 105 et pour l'élément 106a, sur les ailes 113a et 114a de l'élément 106. Le blocage d'un piston 123 par rapport au corps de l'élément 105 est obtenu par frottement serré des joints 124 et 125 ou par un pion anti-rotation, non représenté sur la figure.

Le fonctionnement du dispositif de protection réalisé suivant le deuxième mode qui vient d'être décrit est analogue à celui obtenu par le premier mode. On notera simplement que la première étape du procédé de soudage utilisant le dispositif diffère en ce qu'au lieu d'un effet de gravité, la mise en position des éléments articulés 105, 106 et 106a doit se faire au moyen d'un gabarit sur lequel prennent appui lesdits éléments et qui reproduit le profil de la ligne de cordon de soudure à réaliser sur la pièce. La figure 8 montre un exemple de cette mise en position du dispositif de protection selon le deuxième mode de réalisation représenté sur la figure 7. Un rayon de 150 mm peut être obtenu dans l'exemple représenté. Comme précédemment, la géométrie variable du dispositif de protection permet son adaptation à différentes configurations de pièce tout en assurant la protection recherchée adéquate des soudures et des zones fondues jusqu'à leur refroidissement et en permettant une utilisation avantageuse sur des installations automatisées de soudage.

## Revendications

1. Dispositif de protection de soudure par diffusion gazeuse dans lequel des organes de diffusion alimentés en gaz protecteur sont placés à proximité du cordon de soudure caractérisé en ce qu'il comporte au moins deux éléments (5, 6 ; 105, 106, 106a) formant caissons articulés entre eux et reliés à une extrémité de manière articulée à un élément de fixation formant buse (4 ; 104) sur une tête (1) de soudage, lesdits éléments (5, 6 ; 105, 106, 106a) étant reliés à une source (8) d'alimentation en gaz protecteur et étant susceptibles d'être bloqués entre eux dans une position déterminée sous l'effet de la pression du gaz.

2. Dispositif de protection de soudure selon la revendication 1 dans lequel une arrivée unique distribue le gaz vers la tête (1) de soudage proprement dite et vers ledit dispositif (3) de protection.

3. Procédé de soudage sous gaz protecteur par déplacement automatique d'une tête de soudage associée à un dispositif de protection conforme à l'une des revendications 1 ou 2 caractérisé en ce qu'il comporte les trois étapes suivantes :
(a) - une première étape au cours de laquelle les éléments articulés du dispositif de protection sont mis dans une position adaptée au contour de pièce à souder, notamment suivant une ligne de portion de circonférence dont le rayon correspond à celui de la ligne circulaire de cordon de soudure à obtenir ;
(b) - une deuxième étape d'immobilisation au cours de laquelle l'arrivée du gaz de protection est ouverte et lesdits éléments articulés sont immobilisés entre eux sous l'effet de la pression du gaz ;
(c) - une troisième étape au cours de laquelle la tête de soudage et le dispositif solidaire de protection sont placés à la distance de la pièce, convenable pour le soudage, cette étape étant suivie de l'exécution proprement dite du soudage avec protection du cordon de soudure par diffusion gazeuse, au moyen dudit dispositif de protection.

4. Procédé de soudage sous gaz protecteur selon la revendication 3 dans lequel au cours de la première étape (a), la mise en position des éléments articulés du dispositif de protection est assurée par une séquence d'accostage au cours de laquelle la tête de soudage est amenée au niveau de la surface de pièce à souder et par simple effet de gravité, les éléments articulés se mettent en appui suivant le contour de pièce à souder.

5. Procédé de soudage sous gaz protecteur selon la revendication 3 dans lequel au cours de la première étape (a), la mise en position des éléments articulés du dispositif de protection est obtenue au moyen d'un gabarit reproduisant le profil de la ligne de cordon de soudure à réaliser sur la pièce et sur lequel lesdits éléments articulés prennent appui.

## Patentansprüche

1. Mit Gasdiffusion arbeitende Schweiß-Shutzvorrichtung, in der mit Schutzgas gespeite Verteileorgane in der Nähe der Schweißnaht angeordnet sind, dadurch gekennzeichnet, daß die Vorrichtung wenigstens zwei Elemente (5, 6; 105, 106, 106a) aufweist, die Kästen bilden, die miteinander und mit einem Ende eines Befestigungselements gelenkig verbunden sind, das an einem Schweißkopf (1) eine Düse (4; 104) bildet, wobei die genannten Elemente (5, 6; 105, 106, 106a) mit einer Schutzgas-Speisequelle (8) verbunden und durch die Wirkung des Gasdrucks in einer bestimmten Position gegeneinander blockierbar sind.

2. Schweiß-Schutzvorrichtung nach Anspruch 1, bei der das Gas durch einen einzigen Zulauf auf den eingentlichen Schweißkopf (1) und die gennante Schweiß-Schutzvorrichtung (3) verteilt wird.

3. Verfahren zum Schutzgasschweißen durch automatisches Verschieben eines Schweißkopfs, dem eine Schutzvorrichtung nach einem der Ansprüche 1 oder 2 zugeordnet ist, gekennzeichnet durch die drei folgenden Verfahrensschritte:
(a) - einen ersten Verfahrensschritt, in dessen Verlauf die gelenkigen Elemente der Schutzvorrichtung in einer an die Kontur des zu schweißenden Werkstücks angepaßten Position, insbesondere entlang einer Linie eines Umfangsabschnitts angeordnet werden, deren Radius dem Radius der kreisförmigen Linie der herzustellenden Schweißnaht entspricht,
(b) - einen zweiten Verfahrensschritt der Festlegung, in dessen Verlauf der Schutzgaszulauf geöffnet wird und die gelenkigen Elemente durch die Wirkung des Gasdrucks gegeinander festgelegt werden,
(c) - einen dritten Verfahrensschirt, in dessen Verlauf der Schweißkopf und die verfestigte Schutzvorrichtung in dem für das Schweißen geeigneten Abstand von dem Werkstück angeordnet werden, wobei auf diesen Verfahrensschritt die Ausführung des eigentlichen Schweißvorgangs mit Schutz durch Gasdiffusion mit Hilfe der Schutzvorrichtung folgt.

4. Verfahren zum Schutzgasschweißen nach Anspruch 3, bei dem im Verlauf des ersten Verfahrensschritts (a) das Plazieren der gelenkigen Elemente der Schutzvorrichung durch eine Ankopplungssequenz erfolgt, in deren Verlauf der Schweißkopf auf das Niveau der Oberfläche des zu schweißenden Werkstücks geführt wird und die gelenkigen Elemente sich durch einfache Schwekraftwirkung, der Kontur des zu schweißenden Werkstrücks folgend, an diesem zur Anlage kommen.

5. Verfahren zum Schutzgasschweißen nach Anspruch 3, bei dem im Verlauf des ersten Verfahrensschritts (a) die Plazierung der gelenkigen Elemente der Schutzvorrichtung mit Hilfe einer Schablone bewerkstelligt wird, die das Profil der an dem Werkstück herzustellenden Schweißnahtlinie nachbildet, und an der die gelenkigen Elemente zur Anlage kommen.

## Claims

1. Weld-shielding device operating by gas diffusion, in which diffusion members supplied with shielding gas are placed in the vicinity of the weld bead, characterised in that it includes at least two elements (5, 6; 105, 106, 106a) forming boxes articulated to each other and connected at one end, in an articulated manner, to a fastening element forming a nozzle (4; 014) on a welding head (1), the said elements (5, 6; 105, 106, 106a) being connected to a shielding-gas supply source (8) and being capable of being locked together in a defined position due to the effect of the pressure of the gas.

2. Weld-shielding device according to Claim 1, in which a single inlet distributes the gas towards the welding head (1) proper and towards the said shielding device (3).

3. Method of welding, under a shielding gas, by automatically moving a welding head associated with a shielding device in accordance with either of Claims 1 and 2, characterised in that it includes the following three steps:
(a) - a first step during which the articulated elements of the shielding device are set into a position matching the contour of the workpiece to be welded, especially along a line forming a portion of circumference whose radius corresponds to that of the circular weld-bead line to be obtained;
(b) - a second, locking step during which the inlet of the shielding gas is opened and the said articulated elements are locked together due to the effect of the pressure of the gas;
(c) - a third step during which the welding head and the shielding device held fast are placed at some distance from the workpiece, suitable for welding, this step being followed by the execution proper of the welding with shielding of the weld bead, by gas diffusion, by means of the said shielding device.

4. Method of welding, under a shielding gas, according to Claim 3 in which, during the first step (a), the articulated elements of the shielding device are set into position by a coming-up-alongside sequence during which the welding head is brought to the surface of the workpiece to be welded and, simply by gravity, the articulated elements are set into bearing contact along the contour of the workpiece to be welded.

5. Method of welding, under a shielding gas, according to Claim 3 in which, during the first step (a), the articulated elements of the shielding device are set into position by means of a template which reproduces the profile of the weld-bead line to be produced on the workpiece and on which the said articulated elements bear.
